# EUROPEAN PATENT SPECIFICATION

(11) **EP 4 063 332 B1**
(45) Date of publication and mention of the grant of the patent: **21.10.2026**
(21) Application number: 21163974.5
(22) Date of filing: 22.03.2021
(51) Int. Cl.: C03B 5/027, C03B 5/235, C03B 5/03, C03B 5/02, C03B 5/225, C03B 5/24, C03B 5/43, C03C 3/076

(54) **METHOD OF MAKING HIGH QUALITY GLASS PRODUCTS FROM HIGH VISCOSITY MELTS**
VERFAHREN ZUR HERSTELLUNG VON HOCHQUALITATIVEN GLASPRODUKTEN AUS HOCHVISKOSEN SCHMELZEN
PROCÉDÉ DE FABRICATION DE PRODUITS DE VERRE DE HAUTE QUALITÉ À PARTIR DE MATIÈRES FONDUES À VISCOSITÉ ÉLEVÉE

(43) Date of publication of application: 28.09.2022
(73) Proprietor: SCHOTT AG, 55122 Mainz (DE)
(72) Inventor: Römer, Hildegard, 61184 Karben (DE); Hahn, Michael, 65329 Hohenstein (DE); Rosner, Stefan, 92712 Pirk (DE); Trinks, Volker, 95666 Mitterteich (DE); Eichholz, Rainer Erwin, 60323 Frankfurt am Main (DE); Bergmann, Christoph, 30167 Hannover (DE); Vogl, Armin, 07751 Jena (DE); Hessenkemper, Jörg, 07749 Jena (DE); Blei, Horst, 55246 Mainz-Kostheim (DE); Schönberger, Klaus, 55127 Mainz (DE); Haas, Sybille, 65195 Wiesbaden (DE); Räke, Guido, 55457 Horrweiler (DE); Schmitt, Stefan, 55271 Stadecken-Elsheim (DE); Berndhäuser, Christoph, 55268 Nieder-Olm (DE); Claußen, Olaf, 55278 Undenheim (DE); Klein, Christopher, 55120 Mainz (DE); Schmidbauer, Wolfgang, 55126 Mainz (DE)
(74) Representative: Fuchs Patentanwälte Partnerschaft mbB

(56) References cited:
- WO-A1-2018/039398
- US-A1- 2006 144 091

## Description

The invention relates to methods of making high quality glass products.

### Background

There are different kinds of glass compositions. Some glass compositions are relatively easy to manufacture in good quality, others require sophisticated equipment and/or extremely well balanced production processes. Generally, the glass compositions used to make drinking glasses and ordinary windowpanes are of the former type. One reason is that the glass used for these products has rather low melting temperatures and a steep viscosity-temperature curve; in addition, quality criteria of the manufactured products are not very stringent. For example, ordinary windowpanes and drinking glasses may contain an occasional bubble, and slight variations in shape and dimension are tolerable.

The types of glass compositions used for many mass products, such as soda lime glass compositions, have low melting temperatures because of significant amounts of alkali metal oxides and alkaline earth metal oxides. The respective glass melting facilities achieve very high throughput, often more than 200 tons of glass per day, or even 400 tons per day. Of course, the amount of energy needed for making 200 tons of low melting glass is significantly lower than for a higher melting glass.

WO 2018/039398 A1 discloses a melting apparatus with a melting vessel with a back wall, a front wall, a first side wall, a second side wall and a longitudinal centerline extending therebetween and a width between the first and second side walls orthogonal to the centerline. The melting vessel further includes a first feed screw including a first axis of rotation and a second feed screw including a second axis of rotation, the first axis of rotation positioned between the longitudinal centerline and the first side wall and the second axis of rotation positioned between the longitudinal centerline and the second side wall. The positions of either one or both the first and second axes of rotation are located from a respective side wall at a distance that is equal to or less than about 15% of the width of the melting vessel. WO 2018/039398 A1 also discloses methods for forming a glass article from a molten material, and methods for reducing inhomogeneity in the molten material.

The quality required for a given product depends on its intended use. Some high-quality glasses are used to make products that do not entertain the occasional bubble and must meet stringent criteria in terms of shape and dimensional variations. Many of these glasses are rather difficult to manufacture not only because of the stringent criteria but also because of high melting temperatures. High melting temperatures may be necessary to achieve melt viscosities sufficient for homogenization and removal of bubbles from the melt.

It is an object of this invention to provide glass products that meet high quality criteria.

### Summary of the Invention

In a first aspect, the invention relates to a method of making high quality glass products from high viscosity melts, the method comprising
- heating glass raw material to obtain a glass melt,
- heating the glass melt in a melting tank, the melting tank having a melting tank bottom, and the glass melt having a volume and a melt surface,
- removing bubbles from the melt, wherein a bubble is a gaseous inclusion within the glass melt having a diameter of at least 10 µm, wherein the diameter means the largest diameter of the gaseous inclusion,
- withdrawing the glass melt from the melting tank at a rate of 2.0 t per m³ melt volume per 24 h or less,
- obtaining a glass product having less than 20 bubbles per kg of glass;

wherein the glass melt is heated using one or more heat sources such that at least a part of the glass melt has a viscosity of 10^{2.5} dPas or less, whereby the viscosity can for example be measured using a rotational viscosimeter for instance as described in DIN ISO 7884-2:1998-2,
wherein heating the glass melt includes heating the melt surface and/or directly heating the glass melt volume, further wherein the amount of thermal energy introduced directly into the glass melt volume is more than 60% of the total amount of thermal energy introduced into the melt in the melting tank;
wherein the maximum difference between a temperature at a location on the glass melt surface and a temperature at a location at the melting tank bottom vertically underneath said location is such that the difference in glass melt densities corresponding to said temperatures is less than 0.05 g/cm³ per meter distance between the two locations;
wherein the glass melt has a viscosity of 10² dPas at a temperature above 1580°C.

The method of this invention is for glass compositions with very high melting temperatures, such as glass compositions comprising only limited amounts of alkali and alkaline earth metal oxides. The composition of the glass is such that the melt has a viscosity of 100 dPas at temperatures above 1580°C. The invention includes heating the melt to a temperature sufficiently high that the viscosity is 10^{2.5} dPas or less. This means that a lot of energy is required. Low viscosities and the corresponding high temperatures are desirable for bubbles to leave the melt.

The method includes that a major part of the thermal energy is introduced directly into the glass melt volume. For example, one or more electrodes may be used to heat the glass melt directly. One or more electrodes may be located partially or completely in or on a wall of the melting tank. One or more electrodes may be located partially or completely in or on a bottom plate of the melting tank. In an embodiment, one or more electrodes constitute a wall section and/or a bottom plate section of the melting tank.

It was found that if a maximum difference in glass melt densities between (a) a location on the surface of the glass melt in the melting tank and (b) a location at the melting tank bottom vertically underneath said location is limited, the occurrence of short-circuit glass flow can be avoided. Short-circuit glass flow is undesirable because it means that portions of the melt take a shortcut to an outlet of the melting tank. These portions have reduced dwelling time in the melting tank. The resulting glass products typically have large amounts of bubbles and/or striae.

The glass compositions of the method disclosed herein have high viscosities. These compositions often contain high amounts of SiO₂ and Al₂O₃. Both components have rather high melting temperatures. In most glass melts, SiO₂ is the last component in the batch that liquefies. This means that before all the components of the batch liquefy, there may be portions within the melt volume having reduced proportions of higher melting components. Of course, the mentioned portions within the melt volume have higher amounts of lower melting components, particularly of the alkalis. The method described herein avoids short-circuit glass flow by limiting a difference in glass melt densities within the melting tank. Limiting the density difference as described herein reduces undesired volume flow within the melting tank induced by differences in density. Thereby, very high quality glass products are obtainable. Particularly, glass products produced by the method described herein may have particularly low bubble counts, and/or low or no striae.

The glass products have a very low bubble count. Notably, by avoiding short-circuit glass flow, the dwelling time of the glass melt in the melting tank is sufficiently long for bubbles to rise to the glass melt surface and leave the melt volume. This is relevant for highly viscous melts because bubbles rise to the surface with lower speed in viscous melts compared to low viscosity melts. This is true even for glass compositions that have a rather high temperature dependence of glass melt density.

As discussed before, the method avoids that portions of the melt take shortcuts to the exit of the melting tank. Particularly, this applies to low viscosity portions of the melt that tend to have lower relative amounts of SiO₂. The method of this invention does not allow low viscosity portions of the melt to leave the melting tank before the final glass composition is achieved within the melting tank. The result is a high quality glass product.

### Definitions

A "glass melt" is a volume of a batch of glass raw materials that has a viscosity of less than 10^{7.6} dPas.

A "melting tank" is a vessel used for melting glass. The vessel defines a volume that can contain a glass melt. The melting tank may have a substantially rectangular base, or bottom plate. It may have walls to keep the melt within the tank. Typically, a melting tank will not be filled to the rim. A melting tank may have a cover above the glass melt surface ("covered melting tank"). The cover may be vaulted. The "melting tank" may be a part of a larger melting facility, which may comprise further parts such as a refining tank or refining area. Some melting facilities have a combined tank with different sections, one section for melting and one for refining, in which case the "melting tank" according to this disclosure relates to the whole combined tank including the refining section.

The "bottom plate" is a part of the melting tank that forms the bottom of the tank. The bottom plate may be a single piece of material. Alternatively, the bottom plate may be composed of a plurality of parts or sections. The bottom plate may be closed, i.e. essentially impermeable to the glass melt. Alternatively, the bottom plate may have a closable opening so that glass melt may be withdrawn from the melting tank through the bottom opening.

The "hottest location on the glass melt surface" is the spot on the surface of the glass melt within the melting tank that has the hottest temperature compared to other locations on the surface of the glass melt within the melting tank. The temperatures on the glass melt surface can easily be measured using thermocouples and/or pyrometers. Temperatures on the bottom of the melting tank may for example be measured using thermocouples within the bottom plate or extending into the melt. Thermocouples may be water-cooled. The "glass melt surface" is the part of the melt that is in direct contact with the surrounding atmosphere (e.g. air). The melting tank may comprise portions where unmelted raw material swims on melted material, e.g. close to a raw material inlet port. These portions - which may correspond to 10 to 30% of the melting tank area - are not considered part of the glass melt surface.

The shortest distance between the "glass melt surface" and the melting tank bottom that is in contact with the melt, is the "glass melt depth" at the location under consideration.

A "bubble" is a gaseous inclusion within the glass or the glass melt, optionally having a diameter of at least 10 µm. The "diameter" means the largest diameter of the gaseous inclusion.

"Dwelling time" is the time that a given portion of the glass melt spends in the melting tank before being withdrawn from the melting tank. Dwelling time can be measured using so-called tracers, i.e. components that are added to the glass melt so that they can be detected in the product, allowing conclusions as to the time spent in the melting tank. Examples of tracer compounds are Ca, Sr and Y. The "minimum dwelling time" is the time that a portion of glass melt needs to travel through the melting tank taking the fastest path, i.e. the time between addition of an amount of tracer compound into the melting tank and the first occurrence of the tracer in the product. The "average dwelling time" is defined as $\frac{meting tank volume \left[{m}^{3}\right]}{melting tank throughput \left[\frac{{m}^{3}}{h}\right]} .$

### Brief description of the drawings

- **Figure 1**: shows a melting tank that can be used in a method according to embodiments of the invention.
- **Figure 2**: shows a melting tank that can be used in a method according to embodiments of the invention.
- **Figure 3**: shows a melting tank that can be used in a method according to embodiments of the invention.
- **Figure 4**: shows a diagram of glass melt density versus temperature in a temperature range of from about 800 to about 1700°C.
- **Figure 5**: shows a diagram of glass melt density versus temperature in a temperature range of from about 800 to about 1700°C.
- **Figure 6**: illustrates glass melt flow velocities in a melting tank with significant density differences.
- **Figure 7**: illustrates glass melt flow velocities with additional electrode heating to reduce density differences and thus melt flow velocities.
- **Figure 8**: shows viscosity curves of four exemplary technical glass compositions that can be produced using the method of this invention.

### Detailed description

The method includes heating glass raw material to obtain a glass melt. Heating takes place in the melting tank, typically having a melting tank bottom. The melting tank may have melting tank walls and/or an optionally vaulted cover. The melting tank is filled with the glass melt up to a certain level. The glass melt has a melt surface at the interface between the melt volume and the atmosphere above the melt. Heating may include high-frequency heating, such as in a melting tank having cooled walls. The walls of the melting tank may be cooled using a cooling agent, such as water. Cooling may include flowing the cooling agent through channels within melting tank walls. Cooling melting tank walls has the advantage that corrosion of melting tank wall material is reduced.

The method includes removing bubbles from the melt. Removing bubbles from the melt may occur within the melting tank and optionally outside the melting tank e.g. in a separate vessel. The separate vessel may be a fining vessel. Bubbles may be removed from the melt using chemical and/or physical methods. In an embodiment, removing bubbles from the melt includes that bubbles rise to the glass melt surface in the melting tank. In embodiments, bubbles are removed from the melt in the melting tank by rising to the glass melt surface, and further bubble removal is performed in a separate vessel afterwards. Owing to the improved method of this invention, bubble removal in the melting tank contributes to achieving excellent bubble quality in the glass product. In embodiments, the method includes the step of removing bubbles from the melt in the melting tank and/or in a separate fining vessel after withdrawing the glass made from the melting tank. A temperature of the glass melt in the fining vessel may be higher than the highest temperature of the glass melt in the melting tank. Preferably, the method of this invention does not include vacuum fining and/or bubbling the melt.

The method includes withdrawing the glass melt from the melting tank. The method of this invention is a relatively low throughput method focusing on glass product quality instead of quantity. In an embodiment, the glass melt is withdrawn from the melting tank at a rate of 2.0 t per m³ melt volume per 24 h (t/(m³*24h))or less. This means that per day not more than 2.0 t of glass melt are withdrawn from the melting tank per m³ glass melt present in the melting tank ("withdrawal rate"). Optionally, the withdrawal rate is less than 1.5 t/(m³*24h), less than 1.3 t/(m³*24h), less than 1.1 t/(m³*24h), or less than 0.9 t/(m³*24h). In an embodiment, the withdrawal rate is at least 0.1 t/(m³*24h), at least 0.3 t/(m³*24h), or at least 0.5 t/(m³*24h).

The method of this invention includes obtaining a glass product. Optionally, the glass product may have less than 20 bubbles per kilogram of glass. In preferred embodiments, the glass product has less than 10 bubbles, less than 5 bubbles, less than 3 bubbles or less than 2 bubbles per kilogram of glass.

The method includes heating the glass melt using one or more heat sources. In an embodiment, the heat sources include electrodes that contact the glass melt. The electrodes can comprise or consist of a metal, alloy or metal oxide, such as platinum, iridium, tungsten, molybdenum or tin oxide. Alternatively or additionally, the heat sources include burners such as gas burners and/or microwave heaters. The gas may be natural gas. In embodiments, the gas used for the burners comprises or consists of non-fossil gas, such as biofuel (e.g. biogas) and/or hydrogen, particularly hydrogen obtained from renewable sources. In a preferred embodiment, the amount of thermal energy obtained from burning fossil fuels is less than 10.0%, less than 5.0%, or less than 1.0 % relative to the total amount of thermal energy introduced into the melt.

In an embodiment, the carbon dioxide footprint of the glass product is less than 500 g CO₂ per kg of glass. In another embodiment, the carbon dioxide footprint of the glass product is less than 400 g, less than 300 g, less than 200 g, less than 100 g or even 0 g of CO₂ per kg of glass. For example, a glass product having a carbon dioxide footprint of zero can be made using energy from renewable sources only, e.g. biofuel, hydrogen, or electricity from renewable sources. The carbon dioxide footprint refers to the CO₂ emissions resulting from scope 1 emissions according to the GHG protocol. In this context, this refers to the amount of CO₂ emission caused by burning fossil fuels and released by carbon containing raw materials during manufacturing of the glass product per kg of glass material. Optionally, the raw materials used in the method of this invention do not contain any carbonates, i.e. carbonates may be present as impurities in the raw material (<0.1% by weight) but they are not intentionally added to the composition.

The amount of thermal energy introduced into the melt by heating the surface may be less than 40.0 % relative to the total amount of thermal energy introduced into the melt. Optionally, this value may be less than 30.0%, less than 25.0%, less than 15.0%, or less than 5.0%, or less than 1.0% or even 0%.

In embodiments, heating the melt surface includes heating the surface using one or more microwave heaters, and/or burning bio-fuel and/or hydrogen. Directly heating the melt volume may include electrode heating.

The glass melt is heated such that at least a part of the glass melt has a viscosity of 10^{2.5} dPas or less. Optionally, at least a part of the glass melt may have a viscosity of 10^{2.3} dPas or less. Preferably, glass melt viscosity will not be less than 5 dPas or not less than 10 dPas. Heating the glass to very low viscosities is not preferred as it increases the risk of short-circuit glass flow and increases erosion of the melting tank walls. In addition, low viscosities correspond to very high temperatures which is not preferred in terms of power consumption. Optionally, a minimum viscosity of the glass melt within the glass melt volume is not less than 10 dPas.

Heating the glass includes heating the melt surface and/or directly heating the glass melt volume. In an embodiment, heating includes directly heating the glass melt volume, or alternatively heating the melt surface and directly heating the glass melt volume. It was found that a proper balance between heating the melt surface and the glass melt volume is useful to obtain high-quality glass products of high viscosity glass compositions. Balancing heating the glass melt surface and heating the glass melt volume may result in a reduction of maximum glass melt density difference between a location on the glass melt surface and a location at the melting tank bottom vertically underneath said location as discussed in this disclosure.

The amount of thermal energy introduced directly into the glass melt volume is more than 60% of the total amount of thermal energy introduced into the melt. This refers to the thermal energy introduced into the melt in the melting tank. Introduction of thermal energy may be different in an optional fining vessel or other optional parts of the glass melting facility. In preferred embodiments, the introduction of thermal energy discussed herein may apply to an optional fining vessel and/or fining section in a combined melting tank as well. In an embodiment, the amount of thermal energy introduced directly into the glass melt is more than 70%, more than 76%, more than 80% or more than 90% of the total amount of thermal energy introduced into the melt. Optionally, more than 99% or essentially all of the total amount of thermal energy introduced into the melt is introduced directly into the glass melt volume. In an embodiment, all the thermal energy is introduced directly into the melt, i.e. no heating of the glass melt surface takes place. The exact balance of thermal energy introduction depends on the glass melt properties, e.g. the temperature dependence of glass melt density and viscosity characteristics, including VFT parameters. In an embodiment, a maximum density difference may be reduced by distributing electrodes over the volume of the melting tank such that introduction of heating energy is uniform enough to achieve the desired density difference. For example, if an area near the bottom of the melting tank is too cold, electrodes can be arranged such that more thermal energy reaches that cold spot. Alternatively, if a cold spot is closer to the surface, a longer electrode ranging from the bottom up to the surface of the melt may be used to avoid the cold spot. In an embodiment, the melting tank includes a plurality of electrodes. For example, a number of electrodes may be defined relative to the surface area of the glass melt surface. In an embodiment, the melting tank includes at least 1.0 electrodes per m² of glass melt surface. In embodiments, the number of electrodes per m² of glass melt surface may be at least 2.0, at least 3.0, or at least 6.0. Optionally, the number of electrodes per area of glass melt surface may range up to 8.0 /m² or up to 7.0 /m². Optionally, the heat sources may be arranged such that a uniform heat distribution is achieved.

For example, thermal absorption of the glass melt may influence the balance of thermal energy introduction desired to achieve best results. Higher proportions of direct heating of the glass melt may be appropriate for glass melts with higher thermal absorption. In an embodiment, the thermal absorption coefficient (κ at 1600°C) of the glass melt is at least 8.0 m⁻¹, and optionally up to 60.0 m⁻¹, and the amount of thermal energy introduced directly into the glass melt is more than 60%, or more than 70%. In an embodiment, the thermal absorption coefficient (κ at 1600°C) of the glass melt is at least 10.0 m⁻¹, at least 12.0 m⁻¹ or at least 14.0 m⁻¹. Additionally or alternatively, the thermal absorption coefficient (κ at 1600°C) of the glass melt is at most 55.0 m⁻¹, at most 45.0 m⁻¹ or at most 40.0 m⁻¹.

In the melting tank, the maximum difference between a temperature at a location on the glass melt surface and a temperature at a location at the melting tank bottom vertically underneath said location is such that the difference in glass melt densities corresponding to said temperatures is less than 0.05 g/cm³ per meter distance between the two locations ("maximum density difference"). This "maximum density difference" means that no difference between any two described locations at the surface and vertically underneath it at the bottom below in the melting tank is larger than indicated. As discussed before, minimizing vertical density differences helps to reduce or completely avoid short-circuit glass flow in the melting tank which will ultimately improve quality of the products obtained using the method. Preferably, the density difference is less than 0.04 g/cm³, less than 0.03 g/cm³, or less than 0.02 g/cm³. In certain embodiments, a limited density difference may be unavoidable, such as at least 0.001 g/cm³, or at least 0.005 g/cm³. The "maximum density difference" relates to the magnitude of the difference between the locations, i.e. the density at the surface may be higher or lower than the density at the bottom. Alternatively or additionally, the "maximum density difference" applies to the first half of the melting tank, i.e. the half of the melting tank that includes the raw material inlet after (conceptually) dividing the melting tank at a cross-section perpendicular to its longitudinal axis.

Alternatively or additionally, a difference between a temperature at a hottest location on the glass melt surface and a temperature at a location at the melting tank bottom vertically underneath said hottest location is such that the difference in glass melt densities corresponding to said temperatures is less than 0.04 g/cm³ per meter distance between the two locations ("density difference"). As discussed before, minimizing vertical density differences in the melting tank helps to reduce or completely avoid short-circuit glass flow in the melting tank which will ultimately improve quality of the products obtained using the method. Preferably, the density difference is less than 0.03 g/cm³, less than 0.025 g/cm³, or less than 0.02 g/cm³. In certain embodiments, a limited density difference may be unavoidable, such as at least 0.001 g/cm³, or at least 0.005 g/cm³. The "density difference" relates to the magnitude of the difference between the locations, i.e. the density at the surface may be higher or lower than the density at the bottom. Temperature distribution and thus density distribution can be achieved using electrodes of the desired size and shape. For example, if more thermal energy is needed close to the glass melt surface, longer electrodes can be used. In an embodiment, heating the melt may include heating with one or more electrodes extending upwardly from the bottom of the melting tank up to at least 50% glass melt depth, preferably at least 60%, at least 70% or at least 80% of the glass melt depth. Optionally, the one or more electrodes may extend up to 100%, up to 95% or up to 90% of the glass melt depth from the bottom of the melting tank. Optionally, the one or more electrodes may extend from 50% to 100%, from 60% to 95%, or from 70% to 90% of the glass melt depth from the bottom of the melting tank.

In an embodiment, the melting tank has electrodes surfaces that contact the glass melt during heating the glass melt, which are referred to as "electrode surface area". The "total electrode surface area" is the sum of the surface areas of all electrodes in the melting tank. This value may be at least 015 m² per m³ of glass melt volume, at least 0.2 m² per m³ glass melt volume or at least 0.25 m² per m³ glass melt volume. Optionally, the total electrode surface area may range up to 1.5 m² per m³ or up to 1.25 m² per m³ of glass melt volume.

The temperature at which the glass melt has a viscosity of 10² dPas is herein called temperature T2. Similarly, the temperature at which the glass melt has a viscosity of 10⁴ dPas is herein called temperature T4. Temperature T2 is less than 1500°C for glass compositions with high contents of alkali metal oxides or alkaline earth metal oxides, such as soda lime glass and other glass compositions. The glass compositions used in this invention have much higher T2 and/or T4 temperatures. The T2 temperature for the glass melt in the melting tank during the method of this disclosure is above 1580°C and preferably even above 1600°C or above 1620°C. In embodiments, T2 temperature of the glass compositions may be less than 1800°C, less than 1750°C or less than 1700°C. Glass compositions with very high T2 temperatures are very difficult to process and require a lot of energy for melting.

The T4 temperature of the glass composition in the melting tank during the method of this disclosure is above 1000°C and preferably even above 1050°C or above 1120°C. In embodiments, T4 temperature of the glass compositions may be less than 1400°C, less than 1350°C or less than 1300°C. Glass compositions with very high T4 temperatures are very difficult to process and require a lot of energy for melting.

High melting point glass compositions require high melting temperatures, which may in turn require significant cooling of the melting tank walls in order to avoid excessive corrosion of the wall material. Extensive cooling of melting tank may have a negative influence on glass melt flow as it may greatly accelerate melt flow viscosity, increasing the risk of short circuit glass flow.

It was found that a minimum dwelling time in the melting tank may be set to at least 10 h, at least 12 h or at least 14 h. Sufficient dwelling time is useful for making a high quality glass product. Optionally, a minimum dwelling time may be up to 70 h, up to 65 h or up to 60 h. Additionally or alternatively, an average dwelling time may be 48 h ± 12 h. Too long dwelling times are not desirable considering that long dwelling times increase the carbon dioxide footprint of the glass products. In an embodiment, the minimum dwelling time is at least 20% of the average dwelling time. Optionally, the minimum dwelling time may be at least 25% or at least 35% or at least 45% of the average dwelling time. Of course, the higher the ratio minimum dwelling time to average dwelling time, the more energy efficient the process will be. The process of this invention helps to achieve a desirable ratio of minimum to average dwelling time, such as from 20% to 100%, or up to 90%, up to 80% or up to 70%.

The melting tank may be made of a variety of heat resistant materials. In an embodiment, the bottom plate and/or walls of the melting tank comprise or consist of refractory material. The refractory material may be a ceramic material, a metal material or a combination thereof. A suitable metal is platinum. Platinum is very expensive and may contaminate the melt, if it dissolves due to aggressive melt components. In preferred embodiments, the refractory material does not comprise or consist of platinum and/or other metal. In an embodiment, the refractory material is an oxidic ceramic, i.e. a material comprising or consisting of one or more oxides, such as metal oxides. Preferably, the refractory material is temperature resistant up to at least 1400°C, at least 1600°C or even at least 1700°C. "Temperature resistant" means in this context that the refractory material has a melting point or melting range above the indicated temperature. In an embodiment, the refractory material is selected from ZrO₂, Al₂O₃, SiO₂ and combinations thereof.

The method disclosed herein may be used for glass melts having resistivities at 1700°C of at least 1.5 Ωcm. A minimum resistivity is useful for effective heating and reduced currents. Optionally, resistivity of the glass melt may range up to 30 Ωcm, up to 25 Ωcm or up to 20 Ωcm. In an embodiment, glass melt resistivity may be at least 2.0 Ωcm, at least 3.0 Ωcm or at least 4.0 Ωcm. Optionally, glass melt resistivity may range from 1.5 Ωcm to 30 Ωcm, from 2.0 Ωcm to 25 Ωcm, or from 3.0 Ωcm to 20 Ωcm.

Depending on the introduction of thermal energy into the glass melt, glass melt density at a location on the glass melt surface may be smaller than at the location at the melting tank bottom vertically underneath said location. This may be the case, if a considerable amount of thermal energy is introduced into the glass melt by heating the surface of the melt. Alternatively, glass melt density may be larger at a location on the glass melt surface than at the location at the melting tank bottom vertically underneath said location. In other words, the "density difference" and "maximum density difference" relate to the magnitude of difference between the locations.

Generally, density is larger at cooler temperatures. The more thermal energy is introduced directly into the glass melt volume in relation to the heating energy introduced to the surface of the melt, the hotter will be the melting tank bottom. In an embodiment, heating the glass melt volume includes introducing heat using electrodes at the bottom of the melting tank and/or electrodes in or on a bottom plate of the melting tank. The risk of occurrence of short-circuit glass flow particularly high, if glass melt density at the surface of the melt greatly exceeds the density at the bottom. In an embodiment, glass melt density at the hottest location of the glass melt surface exceeds the glass melt density at the bottom of the melting tank underneath the hottest location by not more than 0.045 g/cm³, not more than 0.035 g/cm³, or not more than 0.025 g/cm³.

It was found that there are glass compositions having a relatively high temperature dependence of the glass melt density in the temperature range of from T4 to T2. This temperature range is of particular relevance for glass melting and methods as discussed herein. A temperature dependence of glass melt density in the temperature range of from T4 to T2 is at least 9.0 mg/cm³ per 100°C and optionally up to 19.0 mg/cm³ per 100°C. This value may relate to the average change of density within the indicated temperature range. Optionally, this temperature dependence of glass melt density is at least 10.0 mg/cm³, at least 11.0 mg/cm³, at least 12.0 mg/cm³, or at least 13.0 mg/cm³ per 100°C of temperature difference. Optionally, this temperature dependence of glass melt density is up to 18.0 mg/cm³, up to 17.0 mg/cm³, up to 16.0 mg/cm³, or up to 15.0 mg/cm³ per 100°C of temperature difference.

As discussed above, the method of this invention is for making high quality products of highly viscous glass compositions. The focus is on quality not quantity, the throughput is low and accordingly the melting tank may be of limited size. Optionally, said vertical distance between a location on the glass melt surface and the location at the melting tank bottom vertically underneath said location is less than 1250 mm, or less than 1100 mm. Additionally or alternatively, the distance may be at least 750 mm, or at least 850 mm. In embodiments, the same applies to the vertical distance between the glass melt surface and the melting tank bottom.

Viscosity can for example be measured using a rotational viscosimeter, e.g. as described in DIN ISO 7884-2:1998-2. The dependence of viscosity on temperature is described according to the VFT equation (Vogel-Fulcher-Tammann). The VFT equation is shown below. $lg \left(η/dPas\right) = A + \frac{B}{\left(t-{t}_{0}\right)}$

In the VFT equation, t is the temperature under consideration. A, B and t₀ are the so-called VFT constants that are specific for each glass composition. As discussed before, viscosity behavior of the glass composition used in the method is of relevance. The temperature dependence of glass melt viscosity may be described using the VFT equation. Optionally, the glass melt has a VFT constant B in the range of from 5,000 to 9,000 K and/or t₀ in the range of from 75°C to 240°C. Preferably, VFT constant A is from -5.0 to 0.0. In an embodiment, A is -1,0 or less, such as -4.0 to -1.0. In embodiments, VFT constant B is from 5,000 K to 9,000 K, such as from 4,500 to 8,500 K. Optionally, t₀ may be at least 75°C and up to 240°C; t₀ may be at least 200°C.

The glass product may have less than 20 bubbles per kilogram of glass. In preferred embodiments, the glass product has less than 10 bubbles, less than 5 bubbles, less than 3 bubbles or less than 2 bubbles per kilogram of glass.

The glass may have a coefficient of thermal expansion in a temperature range of from 20°C to 300°C of from 3.0 ppm/K to 8.5 ppm/K, preferably less than 7.0 ppm/K, or less than 5.5 ppm/K. The coefficient of thermal expansion is the average linear thermal expansion coefficient according to DIN ISO 7991:1987.

The glass product can be a sheet, wafer, plate, tube, rod, ingot or block.

The glass composition may be borosilicate, alumino-borosilicate or aluminosilicate glass. The glass composition may contain alkali metal oxides in amounts of less than 20% by weight, less than 15% by weight, less than 12% by weight, less than 10% by weight or less than 5% by weight. Optionally, the glass composition may be free of alkali metal oxides. In alternative embodiments, the amount of alkali metal oxides in the glass composition may be at least 1% by weight.

The glass composition may contain alkaline earth metal oxides in amounts of less than 20% by weight, less than 15% by weight, less than 12% by weight, less than 10% by weight, or less than 5% by weight. Optionally, the glass composition may be free of alkaline earth metal oxides. In alternative embodiments, the amount of alkaline earth metal oxides in the glass composition may be at least 1% by weight.

The glass composition may contain SiO₂ in an amount of at least 48% by weight, at least 55% by weight, at least 65% by weight, at least 70% by weight or at least 75% by weight. Optionally, the amount of SiO₂ may range up to 85% by weight, up to 82.5% by weight or up to 80% by weight.

Optionally, the glass composition may be that of a glass ceramic, i.e. a glass composition that can be further processed into a glass ceramic by appropriate heat treatment. In case that the glass composition is that of a glass ceramic, the composition may contain nucleating agents such as TiO₂ and/or ZrO₂. Optionally, the total amount of TiO₂ and/or ZrO₂ may be at least 2.0% by weight, such as at least 2.5% by weight. The glass composition may for example be a lithium aluminosilicate glass composition, e.g. containing at least 2.0% by weight of Li₂O.

The glass composition may include one or more fining agents. The fining agent may be selected from multivalent metal oxides, halides, sulfates and combinations thereof. In an embodiment, the fining agent is selected from tin oxide, cerium oxide, chloride, sulfate and combinations thereof.

Optional glass compositions include Al₂O₃ in an amount of at least 1.5% by weight or at least 5.0% by weight or even at least 10.0% by weight. The amount of Al₂O₃ may be up to 23.0% by weight, up to 20.0% by weight or up to 18.0% by weight. In certain embodiments, the amount of Al₂O₃ may range from 1.5% to 23.0% by weight, from 5.0% to 20.0% by weight or from 10.0% to 18.0% by weight.

Additionally or alternatively, the glass composition may include B₂O₃ in an amount of at least 0.0% by weight or at least 8.0% by weight or even at least 10.0% by weight. The amount of B₂O₃ may be up to 20.0% by weight, up to 16.0% by weight or up to 14.0% by weight. In certain embodiments, the amount of B₂O₃ may range from 0.0% to 20.0% by weight, from 8.0% to 16.0% by weight or from 10.0% to 14.0% by weight.

Many highly viscous glass compositions contain significant amounts of SiO₂, Al₂O₃ and B₂O₃. Optionally, the glass compositions used in this invention have a total content of SiO₂, Al₂O₃ and B₂O₃ of at least 75.0% by weight, at least 78.0% by weight or even at least 85.0% by weight. The total amount of SiO₂, Al₂O₃ and B₂O₃ may be limited to not more than 97.0% by weight, up to 93.5% by weight or up to 90.0% by weight. Optionally, the amount of SiO₂, Al₂O₃ and B₂O₃ may range from 75.0% to 95.0% by weight, from 78.0% to 92.5% by weight or from 85.0% to 90.0% by weight.

The following embodiments describe optional aspects and embodiments of this invention.

The invention includes a method of making high quality glass products from high viscosity melts, the method comprising
- heating glass raw material to obtain a glass melt,
- heating the glass melt in a melting tank, the melting tank having a melting tank bottom, and the glass melt having a volume and a melt surface,
- removing bubbles from the melt, wherein a bubble is a gaseous inclusion within the glass melt having a diameter of at least 10 µm, wherein the diameter means the largest diameter of the gaseous inclusion,
- withdrawing the glass melt from the melting tank at a rate of 2.0 t per m³ melt volume per 24 h or less,
- obtaining a glass product having less than 20 bubbles per kg of glass;

wherein the glass melt is heated using one or more heat sources such that at least a part of the glass melt has a viscosity of 10^{2.5} dPas or less,
wherein heating the glass melt includes heating the melt surface and/or directly heating the glass melt volume, further wherein the amount of thermal energy introduced directly into the glass melt volume is more than 60% of the total amount of thermal energy introduced into the melt in the melting tank;
wherein, in the first half of the melting tank, the maximum difference between a temperature at a location on the glass melt surface and a temperature at a location at the melting tank bottom vertically underneath said location is such that the difference in glass melt densities corresponding to said temperatures is less than 0.05 g/cm³ per meter distance between the two locations;
wherein the glass melt has a viscosity of 10² dPas at a temperature above 1580°C.

The invention includes a method of making high quality glass products from high viscosity melts, the method comprising
- heating glass raw material to obtain a glass melt,
- heating the glass melt in a melting tank, the melting tank having a melting tank bottom, and the glass melt having a volume and a melt surface,
- removing bubbles from the melt, wherein a bubble is a gaseous inclusion within the glass melt having a diameter of at least 10 µm, wherein the diameter means the largest diameter of the gaseous inclusion,
- withdrawing the glass melt from the melting tank at a rate of 2.0 t per m³ melt volume per 24 h or less,
- obtaining a glass product having less than 20 bubbles per kg of glass;

wherein the glass melt is heated using one or more heat sources such that at least a part of the glass melt has a viscosity of 10^{2.5} dPas or less,
wherein heating the glass melt includes heating the melt surface and/or directly heating the glass melt volume, further wherein the amount of thermal energy introduced directly into the glass melt volume is more than 60% of the total amount of thermal energy introduced into the melt in the melting tank;
wherein a difference between a temperature at a hottest location on the glass melt surface and a temperature at a location at the melting tank bottom vertically underneath said hottest location is such that the difference in glass melt densities corresponding to said temperatures is less than 0.04 g/cm³ per meter distance between the two locations;
wherein the glass melt has a viscosity of 10² dPas at a temperature above 1580°C.

The invention includes a method of making high quality glass products from high viscosity melts, the method comprising
- heating glass raw material to obtain a glass melt,
- heating the glass melt in a melting tank, the melting tank having a melting tank bottom, and the glass melt having a volume and a melt surface,
- removing bubbles from the melt, wherein a bubble is a gaseous inclusion within the glass melt having a diameter of at least 10 µm, wherein the diameter means the largest diameter of the gaseous inclusion,
- withdrawing the glass melt from the melting tank at a rate of 1.5 t per m³ melt volume per 24 h or less,
- obtaining a glass product having less than 5 bubbles per kg of glass;

wherein the glass melt is heated using one or more heat sources such that at least a part of the glass melt has a viscosity of 10^{2.5} dPas or less,
wherein heating the glass melt includes heating the melt surface and/or directly heating the glass melt volume, further wherein the amount of thermal energy introduced directly into the glass melt volume is more than 60% of the total amount of thermal energy introduced into the melt in the melting tank;
wherein, in the first half of the melting tank, the maximum difference between a temperature at a location on the glass melt surface and a temperature at a location at the melting tank bottom vertically underneath said location is such that the difference in glass melt densities corresponding to said temperatures is less than 0.05 g/cm³ per meter distance between the two locations;
wherein the glass melt has a viscosity of 10² dPas at a temperature above 1580°C.

### Detailed description of the drawings

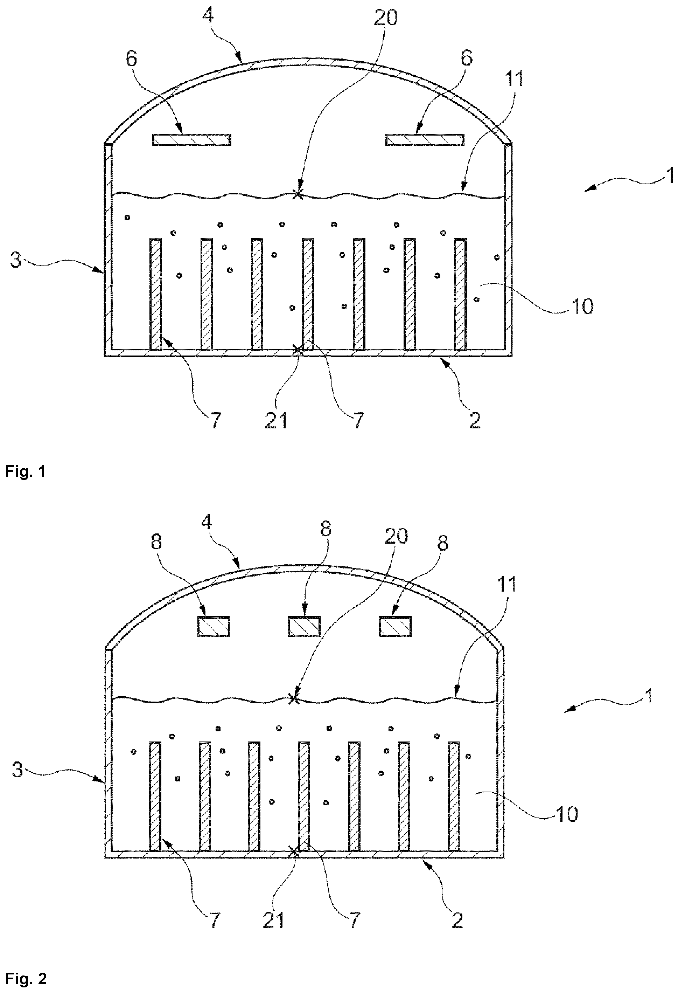

**Figure** 1 shows a schematic and simplified sectional view of melting tank 1 having bottom 2, side walls 3 and cover 4 (vaulted). Melting tank 1 may further have a raw material inlet (not shown), and an outlet (not shown). Melting tank 1 has burners 6 and a plurality of electrodes 7 as heat sources. In the melting tank is glass melt 10 having glass melt surface 11. Glass melt surface 11 has a location 20, i.e. the spot on glass melt surface 11 corresponding to the maximum density difference compared to the other spots on glass melt surface 11. Melting tank 1 has location 21 vertically underneath location 20. The distance between location 20 and 21 may be about 1 meter, for example.

Electrodes 7 heat glass melt 10 directly, whereas burners 6 heat glass melt surface 11. The proportion of thermal energy introduced directly into glass melt 10 may exceed the amount of thermal energy introduced to the melt via glass melt surface 11. In embodiments, 60% of the total thermal energy introduced into glass melt 10 is introduced directly into the volume using electrodes 7. Optionally, burners 6 may burn hydrogen, biofuel or other combustibles of renewable origin.

Generally, electrodes 7 may be in any shape. The drawings show rod-shaped electrodes 7 that extend a long way into melt 10 from the bottom 2 of melting tank 1.

**Figure 2** shows a schematic and simplified sectional view of melting tank 1 similar to that of Figure 1. Instead of burners, melting tank 1 has microwave heat sources 8. Microwave heating is particularly interesting, if the amount of thermal energy to be introduced directly into glass melt 10, e.g. using electrodes 7, is rather large compared to the amount of thermal energy to be introduced by heating melt surface 11. In an embodiment, the amount of thermal energy introduced to glass melt 10 directly using electrodes 7 is at least 70% or even more, such as 75% or more.

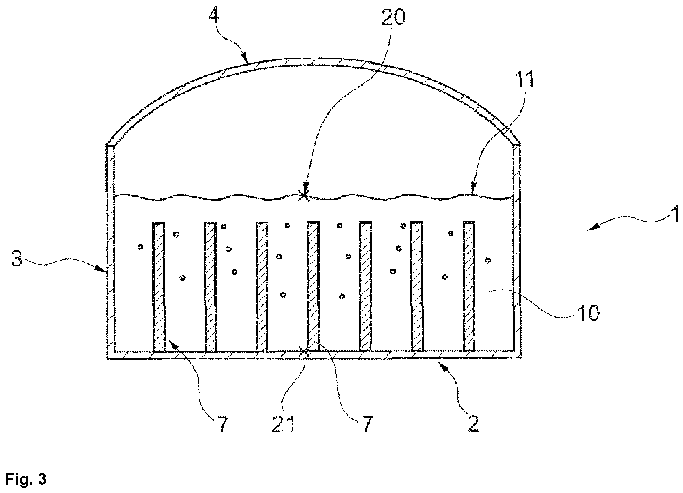

**Figure 3** shows a schematic and simplified sectional view of a melting tank 1 similar to that of Figure 1. Melting tank 1 does not have any burners or other heat sources for heating glass melt surface 11. Consequently, essentially all thermal energy is introduced into glass melt 10 directly, using electrodes 7.

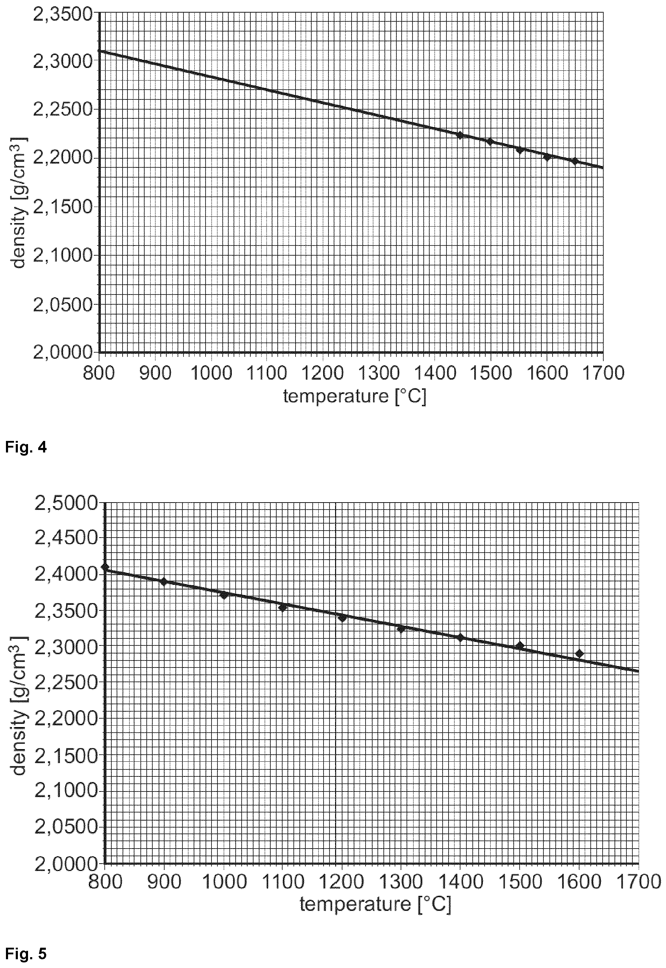

**Figure 4** shows the temperature dependence of glass melt density for an alkali-free, high viscosity glass composition. The composition has a density of about 2.3 g/cm³ at about 870°C, whereas the density is about 2.2 g/cm³ at about 1,540°C. The temperature dependence of this particular glass is thus about 15 mg/cm³ per 100°C.

**Figure 5** shows the temperature dependence of glass melt density for an alkali-containing, high viscosity glass composition. The composition has a density of about 2.4 g/cm³ at about 840°C, whereas the density is about 2.3 g/cm³ at about 1,1540°C. The temperature dependence of this particular glass is thus about 15 mg/cm³ per 100°C.

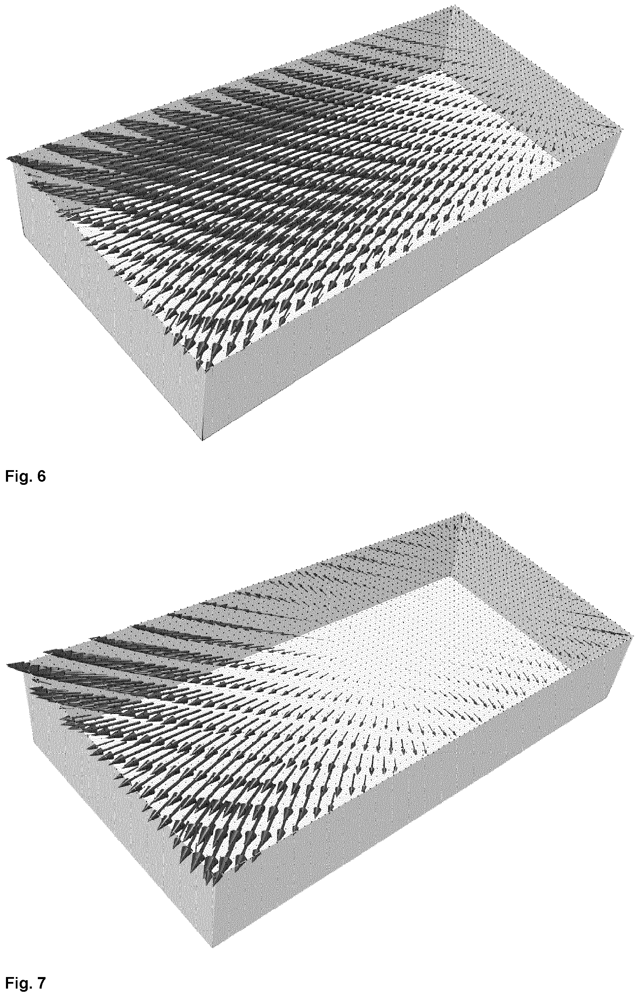

**Figure 6** shows a melt volume. The different arrow sizes indicate the velocity of glass melt flow within a melting tank, wherein smaller arrows relate to a slower velocity and larger arrows relate to faster melt flow velocity. The indication "left" and "right" should be understood with reference to Figures 6 and 7 only.

Melt flow viscosity was modelled based on a glass melt density of 2.5 g/cm³ at 1550°C. The temperature is higher on the right side of the melt volume by 100°C, i.e. Too = 1550°C on the left and 1650°C on the right. This resembles the situation in a melting tank with the refining section on the right. The melt was assumed to have a viscosity of 80 Pas at 1650°C. Further values of the glass melt were set as follows: coefficient of volume expansion β: 50 ppm/K, specific heat capacity cₚ: 1400 J kg⁻¹K⁻¹, thermal conductivity λ_{eff}: 150 W m⁻¹K⁻¹, glass viscosity η at 1550°C : 80 Pas, thermal transmittance of bottom plate at an outside temperature of 27°C: *h =* 15 W/(m²*K), thermal transmittance of side walls at an outside temperature of 27°C: *h =* 15 W/(m²*K), heat loss through cover of melting tank: h = 100 W/(m²*K) towards Too(x), radiant emission with ε = 1 towards Too(x).

There is very fast glass flow in the first two thirds of the melt volume as the melt flows from inlet to fining section.

**Figure 7** shows the same melt volume as described with regard to Figure 6. The only difference is that additional electrode heating was performed close to the inlet on the left side of the melt. Electrode heating reduced the vertical density difference and thereby reduced melt flow velocity significantly. It can be seen from Figure 7 that glass melt flow was much calmer on the whole right hand side of the melt volume when additional electrode heating reduced the vertical temperature and thus density difference on the left side of the melting tank.

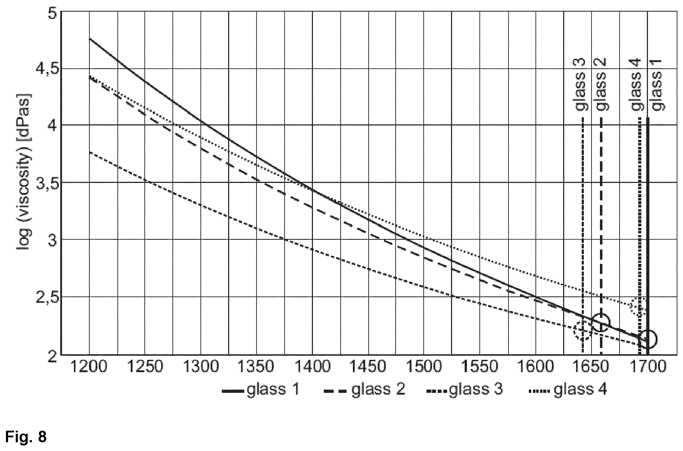

**Figure 8** shows viscosity curves of four glass compositions that can be processed into glass products using methods of this invention. All of these glass compositions exhibit their T2 temperatures beyond 1580°C and T4 beyond 1000°C. The circles enclose the maximum temperature of the glass melts in the process of an exemplary embodiment of this invention.

### Reference numerals

- 1: melting tank
- 2: melting tank bottom
- 3: side walls
- 4: cover
- 6: burners
- 7: electrodes
- 8: microwave heat source
- 10: glass melt
- 11: glass melt surface
- 20: location on glass melt surface
- 21: location at the bottom vertically underneath 20

## Claims

1. Method of making high quality glass products from high viscosity melts, the method comprising
- heating glass raw material to obtain a glass melt,
- heating the glass melt in a melting tank, the melting tank having a melting tank bottom, and the glass melt having a volume and a melt surface,
- removing bubbles from the melt, wherein a bubble is a gaseous inclusion within the glass melt having a diameter of at least 10 µm, wherein the diameter means the largest diameter of the gaseous inclusion,
- withdrawing the glass melt from the melting tank at a rate of 2.0 t per m³ melt volume per 24 h or less,
- obtaining a glass product having less than 20 bubbles per kg of glass;
wherein the glass melt is heated using one or more heat sources such that at least a part of the glass melt has a viscosity of 10^{2.5} dPas or less, whereby the viscosity can for example be measured using a rotational viscosimeter for instance as described in DIN ISO 7884-2:1998-2,
wherein heating the glass melt includes heating the melt surface and/or directly heating the glass melt volume, further wherein the amount of thermal energy introduced directly into the glass melt volume is more than 60% of the total amount of thermal energy introduced into the melt in the melting tank;
wherein the maximum difference between a temperature at a location on the glass melt surface and a temperature at a location at the melting tank bottom vertically underneath said location is such that the difference in glass melt densities corresponding to said temperatures is less than 0.05 g/cm³ per meter distance between the two locations;
wherein the glass melt has a viscosity of 10² dPas at a temperature above 1580°C.

2. Method according to claim 1, wherein the glass melt density at the hottest location on the glass melt surface is smaller or larger than at the location at the melting tank bottom.

3. Method according to claim 1 or 2, wherein a minimum viscosity within the glass melt volume is not less than 10 dPas.

4. Method according to one or more of the preceding claims, wherein the distance between the hottest location on the glass melt surface and the location at the melting tank bottom vertically underneath said hottest location is less than 1250 mm, and optionally at least 750 mm.

5. Method according to one or more of the preceding claims, wherein the amount of heating energy obtained from burning fossil fuels is less than 1.0 % relative to the total amount of heat introduced into the melt.

6. Method according to one or more of the preceding claims, wherein the amount of heating energy introduced into the melt by heating the surface is less than 40.0 % relative to the total amount of heat introduced into the melt.

7. Method according to one or more of the preceding claims, wherein heating the melt surface includes heating the surface using one or more microwave heaters, and/or burning bio-fuel and/or hydrogen.

8. Method according to one or more of the preceding claims, wherein directly heating the melt volume includes electrode heating.

## Patentansprüche

1. Verfahren zur Herstellung von hochqualitativen Glasprodukten aus hochviskosen Schmelzen, wobei das Verfahren umfasst
- Erwärmen von Glasrohmaterial, wobei eine Glasschmelze erhalten wird,
- Erwärmen der Glasschmelze in einer Schmelzwanne, wobei die Schmelzwanne einen Schmelzwannenboden aufweist, und die Glasschmelze ein Volumen und eine Schmelzeoberfläche aufweist,
- Entfernen von Blasen aus der Schmelze, wobei eine Blase ein gasförmiger Einschluss in der Glasschmelze mit einem Durchmesser von wenigstens 10 µm ist, wobei der Durchmesser den größten Durchmesser des gasförmigen Einschlusses bedeutet,
- Entnehmen der Glasschmelze aus der Schmelzwanne mit einer Rate von 2,0 t pro m³ Schmelzevolumen pro 24 h oder weniger,
- Erhalten eines Glasprodukts mit weniger als 20 Blasen pro kg Glas;
wobei die Glasschmelze unter Verwendung von einer oder mehreren Wärmequellen derart erwärmt wird, dass wenigstens ein Teil der Glasschmelze eine Viskosität von 10^{2,5} dPas oder weniger aufweist, wobei die Viskosität zum Beispiel unter Verwendung eines Rotationsviskosimeters zum Beispiel wie in DIN ISO 7884-2:1998-2 beschrieben gemessen werden kann,
wobei Erwärmen der Glasschmelze Erwärmen der Schmelzeoberfläche und/oder direktes Erwärmen des Glasschmelzevolumens einschließt, wobei ferner die Menge an Wärmeenergie, die direkt in das Glasschmelzevolumen eingebracht wird, mehr als 60% der Gesamtmenge an Wärmeenergie, die in die Schmelze in der Schmelzwanne eingebracht wird, beträgt;
wobei der maximale Unterschied zwischen einer Temperatur an einem Ort auf der Glasschmelzeoberfläche und einer Temperatur an einem Ort am Schmelzwannenboden vertikal unterhalb des Ortes derart ist, dass der Unterschied bei Glasschmelzedichten entsprechend den Temperaturen weniger als 0,05 g/cm³ pro Meter Abstand zwischen den zwei Orten beträgt;
wobei die Glasschmelze eine Viskosität von 10² dPas bei einer Temperatur über 1580°C aufweist.

2. Verfahren gemäß Anspruch 1, wobei die Glasschmelzedichte an dem heißesten Ort auf der Glasschmelzeoberfläche kleiner oder größer ist als an dem Ort am Schmelzwannenboden.

3. Verfahren gemäß Anspruch 1 oder 2, wobei eine minimale Viskosität in dem Glasschmelzevolumen nicht weniger als 10 dPas beträgt.

4. Verfahren gemäß einem oder mehreren der vorhergehenden Ansprüche, wobei der Abstand zwischen dem heißesten Ort auf der Glasschmelzeoberfläche und dem Ort am Schmelzwannenboden vertikal unterhalb des heißesten Ortes weniger als 1250 mm, und optional wenigstens 750 mm beträgt.

5. Verfahren gemäß einem oder mehreren der vorhergehenden Ansprüche, wobei die Menge an Erwärmungsenergie, die durch Verbrennen von fossilen Brennstoffen erhalten wird, weniger als 1,0 % relativ zur Gesamtmenge an Wärme, die in die Schmelze eingebracht wird, beträgt.

6. Verfahren gemäß einem oder mehreren der vorhergehenden Ansprüche, wobei die Menge an Erwärmungsenergie, die in die Schmelze durch Erwärmen der Oberfläche eingebracht wird, weniger als 40,0 % relativ zur Gesamtmenge an Wärme, die in die Schmelze eingebracht wird, beträgt.

7. Verfahren gemäß einem oder mehreren der vorhergehenden Ansprüche, wobei Erwärmen der Schmelzeoberfläche Erwärmen der Oberfläche unter Verwendung von einer oder mehreren Mikrowellen-Erwärmungsvorrichtungen, und/oder Verbrennen von Biokraftstoff und/oder Wasserstoff einschließt.

8. Verfahren gemäß einem oder mehreren der vorhergehenden Ansprüche, wobei direktes Erwärmen des Schmelzevolumens Elektrodenerwärmen einschließt.

## Revendications

1. Procédé de fabrication de produits en verre de haute qualité à partir de fontes à haute viscosité, le procédé comprenant :
- le chauffage de matière première de verre pour obtenir une fonte de verre,
- le chauffage de la fonte de verre dans un bassin de fusion, le bassin de fusion présentant un fond de bassin de fusion, et la fonte de verre présentant un volume et une surface de fonte,
- l'élimination de bulles de la fonte, une bulle étant une inclusion gazeuse au sein de la fonte de verre présentant un diamètre d'au moins 10 µm, le diamètre désignant le plus grand diamètre de l'inclusion gazeuse,
- le retrait de la fonte de verre du bassin de fusion à un débit égal ou inférieur à 2,0 t par m³ de volume de fonte par 24 h,
- l'obtention d'un produit en verre présentant moins de 20 bulles par kg de verre ;
dans lequel la fonte de verre est chauffée à l'aide d'une ou plusieurs sources de chaleur de sorte qu'au moins une partie de la fonte de verre présente une viscosité égale ou inférieure à 10^{2·5} dPas, la viscosité pouvant par exemple être mesurée à l'aide d'un viscosimètre rotatif par exemple tel que décrit dans la norme DIN ISO 7884-2:1998-2,
dans lequel le chauffage de la fonte de verre comprend le chauffage de la surface de fonte et/ou le chauffage direct du volume de fonte de verre, en outre dans lequel la quantité d'énergie thermique introduite directement dans le volume de fonte de verre représente plus de 60 % de la quantité totale d'énergie thermique introduite dans la fonte dans le bassin de fusion ;
dans lequel la différence maximale entre une température au niveau d'un emplacement sur la surface de fonte de verre et une température au niveau d'un emplacement sur le fond du bassin de fusion verticalement au-dessous dudit emplacement est telle que la différence de densités de fonte de verre correspondant auxdites températures soit inférieure à 0,05 g/cm³ par mètre de distance entre les deux emplacements ;
dans lequel la fonte de verre présente une viscosité de 10² dPas à une température supérieure à 1580 °C.

2. Procédé selon la revendication 1, dans lequel la densité de la fonte de verre à l'emplacement le plus chaud sur la surface de fonte de verre est inférieure ou supérieure à celle au niveau de l'emplacement sur le fond du bassin de fusion.

3. Procédé selon la revendication 1 ou 2, dans lequel une viscosité minimale au sein du volume de fonte de verre n'est pas inférieure à 10 dPas.

4. Procédé selon une ou plusieurs des revendications précédentes, dans lequel la distance entre l'emplacement le plus chaud sur la surface de fonte de verre et l'emplacement sur le fond du bassin de fusion verticalement au-dessous dudit emplacement le plus chaud est inférieure à 1250 mm, et optionnellement d'au moins 750 mm.

5. Procédé selon une ou plusieurs des revendications précédentes, dans lequel la quantité d'énergie de chauffage obtenue par combustion de combustibles fossiles est inférieure à 1,0 % par rapport à la quantité totale de chaleur introduite dans la fonte.

6. Procédé selon une ou plusieurs des revendications précédentes, dans lequel la quantité d'énergie de chauffage introduite dans la fonte par chauffage de la surface est inférieure à 40,0 % par rapport à la quantité totale de chaleur introduite dans la fonte.

7. Procédé selon une ou plusieurs des revendications précédentes, dans lequel le chauffage de la surface de fonte comprend le chauffage de la surface à l'aide d'un ou plusieurs dispositifs de chauffage à micro-ondes, et/ou la combustion de biocombustible et/ou d'hydrogène.

8. Procédé selon une ou plusieurs des revendications précédentes, dans lequel le chauffage direct du volume de fonte comprend un chauffage par électrodes.
